(19) Europäisches Patentamt
European Patent Office
Office européen des brevets

(11) Publication number: **0 605 891 A2**

## (12) EUROPEAN PATENT APPLICATION

(21) Application number: **93121060.3**

(51) Int. Cl.5: **G11B 7/24**

(22) Date of filing: **29.12.93**

(30) Priority: **08.01.93 US 2001**
**15.09.93 US 121801**

(43) Date of publication of application:
**13.07.94 Bulletin 94/28**

(84) Designated Contracting States:
**DE FR GB**

(71) Applicant: **EASTMAN KODAK COMPANY**
**343 State Street**
**Rochester New York 14650-2201(US)**

(72) Inventor: **Tyan, Yuan-Sheng, c/o Eastman**
**Kodak Company**
**Patent Legal Staff,**
**343 State Street**
**Rochester, New York 14650-2201(US)**
Inventor: **Raychaudhuri, Pranab K., c/o**
**Eastman Kodak Company**
**Patent Legal Staff,**
**343 State Street**
**Rochester, New York 14650-2201(US)**
Inventor: **Pan, Kee-Chuan, c/o Eastman Kodak**
**Company**
**Patent Legal Staff,**
**343 State Street**
**Rochester, New York 14650-2201(US)**
Inventor: **Olin, George R. c/o Eastman Kodak**
**Company**
**Patent Legal Staff,**
**343 State Street**
**Rochester, New York 14650-2201(US)**

(74) Representative: **Wagner, Karl H. et al**
**WAGNER & GEYER**
**Patentanwälte**
**Gewürzmühlstrasse 5**
**D-80538 München (DE)**

(54) **Recordable optical element using low absorption materials.**

(57) There is disclosed a recordable optical element that has a substrate and on the surface of the substrate, a recording layer and a light reflecting layer. The recording layer has a material with the formula $M_a C_b H_c X_d O_e$ wherein M is Sb or Te or an alloy of Sb and Te, C is carbon, H is hydrogen, X is Si or Ge or a combination of the two, and O is oxygen; a is between 10 and 45; b is less than 40, c is less than 40; d is between 10 and 40; e is less than 20, preferably less than 10; moreover, $a + b + c + d + e = 100$ and a/d <3

FIG. I

CROSS-REFERENCE TO RELATED APPLICATION

This application is a continuation-in-part of commonly assigned U.S. Application Serial No. 08/002,001 filed January 8, 1993, entitled "Recordable Optical Element Using Low Absorption Cermet Materials" by Tyan et al.

Field of the Invention

The present invention relates to optical recording elements, particularly to those that are useful as recordable compact disks.

BACKGROUND OF THE INVENTION

There are many types of optical recording materials that are known. In many of the materials, the mode of operation requires that the unrecorded material have a high absorption and that the recorded areas, often referred to as pits, have high reflection. The high reflection pits are made by ablating away the recording material, usually exposing an underlying reflective support.

One of the currently popular forms of optical recordable element is the compact disk or CD. Digital information is stored in the form of low reflectivity marks or pits on an otherwise reflective background, the exact opposite of the above described optical recording materials. In this format, the optical information is most often in the form of read only memory or ROM. Optical information is not usually recorded in real time but rather is produced by press molding. In a typical process, the optical recording substrate is first press molded with a master containing the digital information to be reproduced. The press molded substrate is then overcoated with a reflective layer and then with an optional protective layer. In those areas having the deformations or pits, the reflectivity is lower than in those areas not having the deformations.

It is desirable to produce optical recording elements which, when recorded in real time, produce a record that mimics the conventional CD on read out. In this manner, information can be added to the CD and the CD can be used on a conventional CD player.

One recently disclosed system of this type is the so called "Photo CD". In this system, conventional photographic film is first processed in a conventional manner. Then, the images from the film are digitized and the digital information is recorded in a CD readable form on an optical recording material. Images can then be played back on a conventional CD type player into a conventional television. Since a CD has a capacity for a number of digitized images that is greater than the typical roll of consumer film, it is anticipated that the user will want to add images to a partially recorded CD. Thus the need for recordable, CD compatible optical recording material.

One method for forming a recordable element that mimics conventional mold pressed CD elements is to provide a transparent, heat deformable support having thereon, in order, a layer of a dye that absorbs recording radiation and a reflective layer. Exposure of the recording layer through the support by the recording beam heats the recording layer to an extent that it is said that the surface of the heat deformable support just adjacent to the recording layer surface is deformed. Materials of this type are described in United States Patent No. 4,940,618, European Patent Application 0353393 and Canadian Patent 2,005,520.

Commercially useful materials of the type described in these references have stringent requirements. One of these requirements is light stability. Since the Photo CD is a consumer product, it must be capable of withstanding extreme environments. Between the time the images are first recorded on the Photo CD and the time subsequent images are recorded and played back on a Photo CD player, the CD may be placed in strong sunlight, for example. The recording layer must be very light stable for this purpose.

In the U.S. Patent and the European applications mentioned above, the preferred dyes for the recording layer are indodicarbocyanine dyes. However, this type of dye has less than the desired light stability and will in fact fade to an unusable state in only a few days of exposure to intense sunlight. These applications also disclose one phthalocyanine dye, that is a phthalocyanine dye that has a tert-butyl substituent in one of the b positions on the aromatic rings of the dye. Similarly, the Canadian application mentioned above describes a large number of phthalocyanine dyes. However, all of these phthalocyanine dyes, while having excellent stability, are difficult and expensive to make.

For example, the phthalocyanine dyes of the Canadian application are made by first preparing components of the completed ring, which components have the necessary substituents, and then forming the phthalocyanine ring structure by thermally reacting the mixture with a metallic derivative and effecting ring closure. This is an expensive process characterized by low yield and difficult processes for separation of the desired dye from unreacted components. In a mass produced consumer product, cost of the

2

recording layer dye is a major concern.

Recording materials that do not use dye as the active elements have been reported. Asano et al., (Y. Asano, H. Yamazaki, and A. Morinaka, Jap. J. Appl. Physics V22, p. 480, 1983) described the use of metal containing plasma-polymerized films for optical recording because of their expected low thermal conductivity and high optical absorption. They found both Te containing and Bi containing plasma-polymerized carbon disulfide films suitable. These materials, however, have high volume content of the metallic component, about 90%. The optical density is high, and it is impossible to achieve 70% reflectivity required by the CD specifications. They also described phase-change type recording using a Te containing plasma polymerized styrene using films containing 40% Te on an aluminum reflector. Again, such a structure would not fulfill the reflectivity and contrast requirements of CD specifications. Moreover, the plasma polymerization process is indiscriminative, it coats the target as well as the substrate making it inappropriate for manufacturing.

SUMMARY OF THE INVENTION

Thus, it is an object of this invention to provide a recording element that has high reflectivity, recording sensitivity and contrast to meet the CD specifications.

This object is achieved by a recordable element having a substrate and on the surface of the substrate, a recording layer and a light reflecting layer, the improvement wherein the recording layer is given by the formula $M_aC_bH_cX_dO_e$ wherein M is Sb or Te or an alloy of Sb and Te, C is carbon, H is hydrogen, X is Si or Ge or a combination of the two, and O is oxygen; a is between 10 and 45, preferably between 15 and 35; b is less than 40, preferably between 10 and 30; c is less than 40, preferably between 15 and 35; d is between 10 and 40, preferably between 15 and 25; e is less than 20, preferably less than 10; moreover, $a + b + c + d + e = 100$ and a/d <3.

BRIEF DESCRIPTION OF THE DRAWINGS

FIG. 1 is a schematic representation, in cross-section, of one element in accordance with the invention at the outer edge of the element; and

FIG. 2 is a schematic representation, in cross-section, of another element in accordance with the invention.

DETAILED DESCRIPTION OF THE INVENTION

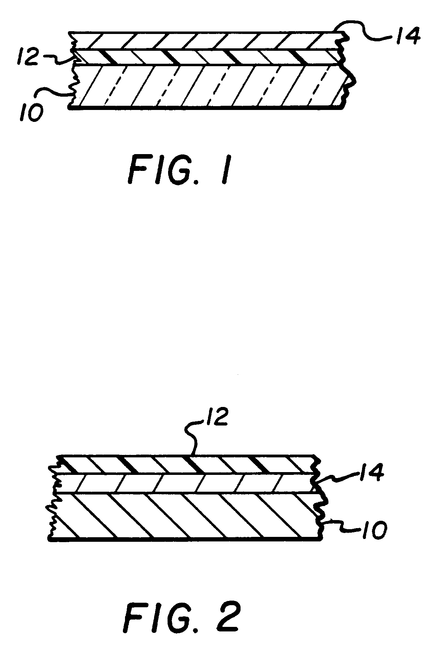

Optical elements according to this invention are shown in FIGS. 1 and 2 include at least three layers. The substrate 10 has thereon, an optical recording layer 12, and a reflective layer 14. Protective layers may also be used but will not be discussed since they are not necessary for the practice of this invention.

In FIG. 1 the substrate is transparent and light which illuminates the recording layer 12 passes through the substrate 10. In FIG. 2, the substrate is opaque and light directly illuminates the recording layer.

Recording is accomplished by marking the recording layer 12 with a write laser focused on the recording layer 12, either through the substrate (FIG. 1) or directly (FIG. 2). The focused laser beam heats the recording layer to temperatures substantially above the room temperature and induces changes in the media. The likely changes may include agglomeration of the metallic components in the layer, or the dissociation of material to form gaseous species which, in turn, causes the deformation of the media package in the form of bubbles, voids, or pits, etc. Some distortion of the substrate material might also be induced. In any event, the combination of some or all of these changes forms marks which can then be read back by the focused read laser beam. The record thus consists of marks of relatively low reflectivity on a background of relatively high reflectivity in relation to the read laser light.

The preferred embodiment of the invention is that of a writable compact disk (CD) as shown in FIG. 1. The write and read lasers are of the laser diode type and operate in the infrared region between 770 and 830 nm.

For a more complete explanation of the optical recording and play back processes as well as the construction of compact disks, see Optical Recording, Allan B. Marchant (1990).

The support:

For FIG. 1, supports can be made from optically transparent resins with or without surface treatment. For FIG. 2, the substrate is opaque relative to write/read laser light. The preferred resins for the FIG. 1 embodiment are polycarbonate and polyacrylates. The support may include a guide groove for laser tracking.

The Reflective Layer:

The reflective layer can be any of the metals conventionally used for optical recording materials. Useful metals can be vacuum evaporated or sputtered and include gold, silver, aluminum and copper alloys thereof. Gold is the preferred reflective layer material.

The Recording Layer or Film:

The present invention uses a recording layer given by the formula $M_aC_bH_cX_dO_e$ wherein M is Sb or Te or an alloy of Sb and Te, C is carbon, H is hydrogen, X is Si or Ge or a combination of the two, and O is oxygen; a is between 10 and 45, preferably between 15 and 35; b is less than 40, preferably between 10 and 30; c is less than 40, preferably between 15 and 35; d is between 10 and 40, preferably between 15 and 25; e is less than 20, preferably less than 10; moreover, $a+b+c+d+e=100$ and a/d <3.. To achieve the reflectivity required, it is necessary to have a small k, the imaginary part of the complex optical indices. The useful range of k values can be expressed by the following formula:

$$k \leq 0.10 \times (n-1)$$

where n is the real part of the optical indices. k and n are terms well understood in the art. n and k can be determined by measuring the refractance of multilayer structures, such as shown on pages 6 and 7 of James D. Rancourt, Optical Thin Films. McGraw-Hill Publishing Company. For an alternative way of calculating n and k, see Chapter 5 of D.E. Aspnes, "Handbook of Optical Constants of Solids" (1985). The metallic part of the cermets contributes mainly to the k values. To achieve the desired low k values the content of the metallic components, such as Sb or Te, needs to be low. The total metal content should be less than about 45 atomic percent.

A large selection of metals can be used to achieve the desired optical properties. Sb and Te when used produce excellent recording performance. Since the reflector layer is thermally very conductive and tends to act like a heat sink to reduce the recording sensitivity, it is highly desirable to reduce the thermal conductivity of the recording layer itself. Furthermore, since the writing process most likely results from the deformation of the media package, it is highly desirable to have an a recording layer that could enhance rather than impede the deformation process. In accordance with this invention, both features can be obtained by using a recording layer that contains large amount so elements such as C, H, F, Cl, N, and O, etc. that can decompose and generate gases upon laser heating during the recording process. In particular, we found C and H to be the most effective. Frequently, O are detected as a result of oxidation during or after the fabrication of the films as well.

It is desirable to prepare the recording layer using conventional deposition techniques for better process and contamination control. Materials containing C and H have been prepared by using plasma polymerization process in conjunction with sputtering or evaporation. In such processes, a relatively high concentration of $C_xH_y$ gas is used in a plasma so that it will polymerize in the gas phase and be deposited on the substrate. If, at the same time, a metal is also deposited by sputtering or evaporation onto the substrate, then a material containing both the metal and C and H is achieved. The problem with such a method is that the plasma polymerization coating technique is indiscriminate. The resulting polymerized organic film is deposited not only on the substrate but also on other places in the vacuum chamber, including the target. As a result, the deposition process becomes unstable and in some cases, the deposition rate continuously drops and eventually the deposition process is halted.

In accordance with this invention, we have discovered that when Si is sputtered in the presence of a hydrocarbon a large amount of C and H is incorporated in the films along with Si. This incorporation can take place at a very low concentration of hydrocarbon where the plasma polymerization process, and hence the target poisoning, is insignificant. We believe that when Si atoms arrive at the substrate, the dangling bonds attract the C and H atoms, and C-H species and by doing so entrap the C and H atoms when further Si atoms are piled on top of them. In any event, the fact is that the deposition of Si in the presence of a hydrocarbon is a very effective way to produce films containing a large amount of C and H. If the metallic component is introduced by sputtering or evaporation during the deposition of Si in the presence of a hydrocarbon then films of the present invention can be produced. Alternatively, Ge can be used in place of Si. An effective film element can contain at least 5 atomic percent Si or Ge or a combination of Si and Ge and less than 45 atomic percent of metallic elements such as Sb, Te or a combination of both.

The preferred method of fabrication for recording layer is DC sputtering. The preferred target contains both the metal and Si or Ge. Even though the phase diagram shows immiscibility between the two components, it is still possible to prepare such targets by, for example, powder metallurgy techniques. Alternatively, a co-sputtering method can be used where two sputtering targets are used, one contains the metal and the other Si or Ge. The atmosphere should contain a sputter gas such as Ar or Kr, and a gas phase supply of "reactive molecules" such as $H_2$, $C_xH_y$, $O_2$, $N_2$, $NH_3$, etc. and their mixtures.

EXAMPLES

Example 1. A thin film layer was deposited onto a polycarbonate substrate using a co-sputtering method. Two DC sputtering guns (2 inch in diameter) were used, one with an Sb target and the other a Si target. The sputtering power was 11 Watts on the Sb target and 75 Watts on the Si target. The sputtering pressure was 3.8 mTorr, at a flow rate of 30 SCCM of Ar and 2.28 SCCM of $CH_4$. After a sputtering time of 2.0 minutes, a 62 nm thin film was obtained. Optical analysis indicated an n value of 2.545 and a k value of 0.068.

A film of 1700 Å thick was fabricated under identical conditions onto a polycarbonate disk substrate. A reflector layer of gold was prepared by vacuum deposition followed by an organic lacquer protective layer. A recording experiment was performed using a dynamic tester equipped with an 830 nm write laser, a 780 nm read laser, and a 0.55 NA objective, at a media linear speed of 5.6 m/s (4 times the CD read). The second harmonic minimum recording power was determined to be 18.5 mW, the readout CNR was 62 dB, the reflectivity was 70%, the $I_{11}/I_{top}$ was 0.86, and the $I_3/I_{top}$ was 0.35.

A typical sample fabricated under similar conditions was analyzed using Rutherford backscattering and the composition was determined to be Sb 20%, Si 18%, C 20%, H 30%, and O 10%. The oxygen was believed to be due to surface oxides and oxygen in the sputtering gases.

Example 2. A series of layers were prepared using the co-sputtering method under the following identical conditions: $CH_4$ flow rate 2.28 STD cc/min; Ar flow rate 30 STD cc/min; sputter pressure 3.7 mTorr.

The power on the Sb and Si target were, however, varied. As a result, the optical properties of the films were varied as shown in the following table. This experiment demonstrates the tunability of these films.

| Film ID | Watt(Si) | Watt(Sb) | n | k |
|---------|----------|----------|------|------|
| R90912 | 75 | 30 | 2.73 | 0.10 |
| R90913 | 75 | 10 | 2.48 | 0.03 |
| R90915 | 100 | 30 | 2.82 | 0.08 |
| R90911 | 100 | 10 | 2.50 | 0.04 |
| R91013 | 50 | 30 | 2.86 | 0.18 |
| R91014 | 50 | 10 | 2.42 | 0.06 |

Example 3. The tunability of films is also demonstrated using an "alloy" target. The target was made by hot pressing and consists of 50 atomic percent Sb and 50 atomic percent Si. The sputtering power on the target was fixed at 75 watt and the Ar pressure and flow rate were maintained at 2 mTorr and 30 STD cc/min., respectively. The flow rate of $CH_4$ was varied, and the optical properties of the resulting films were determined as given in the following table.

| FILM ID | SCCM($CH_4$) | n | k |
|---------|--------------|------|------|
| RC2811 | 6.54 | 3.19 | 0.32 |
| RC2812 | 7.6 | 3.04 | 0.17 |
| RC3011 | 9.12 | 2.83 | 0.16 |
| RC3111 | 10.64 | 2.7 | 0.11 |
| R10211 | 12.16 | 2.62 | 0.11 |

Example 4. A thin film was deposited onto a polycarbonate substrate using a co-sputtering method. Two DC sputtering guns (2 inch in diameter) were used, one with an Sb target and the other a Si target. The sputtering power was 9 Watts on the Sb target and 100 Watts on the Si target. The sputtering pressure was 9.5 mTorr, which was constructed of 25% of Ar and 75% of $H_2$. After a sputtering time of 6.3 minutes, a 121 nm thin-film was obtained. Optical studies indicated an n value of 3.25 and a k value of 0.12. A gold reflector film was deposited on the film. The reflectivity was determined to be 71.4%.

Example 5. A series of thin films were prepared using the co-sputtering method under the following identical conditions: Power on the Si target 100 Watts, $H_2$ flow rate 30 STD cc/min, Ar flow rate 10 STD cc/min, sputtering pressure 9.5 mTorr. The sputtering power on the Sb target was varied. As a result, the optical properties of the films were varied as shown in the following table. This experiment demonstrates the tunability of films using $H_2$ as the reactive gas.

| Film No. | Sb Power (watts) | n | k |
|---|---|---|---|
| 1 | 8 | 3.24 | 0.09 |
| 2 | 9 | 3.25 | 0.12 |
| 3 | 11 | 3.31 | 0.18 |
| 4 | 12 | 3.33 | 0.21 |

Example 6. Two sputtering guns were used, one with a Si target and the other with a $Ge_{40}Te_{60}$ target. The power was 40 Watts on each target. The pressure was 5.57 mTorr, at a flow rate of 20 SCCM Ar and 6 SCCM $CH_4$. An approximately 1600 Å film was deposited onto a polycarbonate disk substrate. Then, a gold reflector layer was sputter deposited and an organic lacquer protective layer was spin coated.

A recording experiment was performed using a 788 nm write and read laser at a speed of 2.8 m/s. The recording power at the second harmonic minimum was 7 mW. The reflectivity was 68.5% and the $I_{11}/I_{top}$ was 0.65. The recording layer was analyzed by Rutherford backscattering and the composition was Te 30%, Ge 20%, Si 4%, O 9%, C 15%, and H 22%.

Example 7. A $Ge_{40}Te_{60}$ sputtering target was used. The power was 40 Watts. The pressure was 4.64 mTorr, at a flow rate of 20 SCCM Ar and 20 SCCM $CH_4$. An approximately 1800 Å film was deposited onto a polycarbonate disk substrate. Then, a gold reflector layer was sputter deposited and an organic lacquer protective layer was spin coated.

A recording experiment was performed using a 788 nm write and read laser, at a speed of 2.8 m/s. The recording power at the second harmonic minimum was 7 mW. The reflectivity was 75% and the $I_{11}/I_{top}$ was 0.64. The recording layer was analyzed by Rutherford backscattering and the composition was Te 31%, Ge 21%, O 1%, C 22%, and H 25%.

Example 8. A thin film was deposited on a polycarbonate disk substrate by co-sputtering Te and Ge in $CH_4$ containing atmosphere. The target powers were 10 and 50 Watt for Te and Ge, respectively, and the flow rates were 20 and 7.5 SCCM for Ar and $CH_4$, respectively at a total pressure of 8.71 mTorr. the film, approximately 588 Å thick, was deposited. Then, a gold reflector layer was sputter deposited and an organic lacquer protective layer was spin coated.

A recording experiment was performed as in the examples above. The recording power at the second harmonic minimum was 9.5 mW. The reflectivity was 67.2%, and the $I_{11}/I_{top}$ was 63%.

The composition of a similarly prepared determined by Rutherford backscattering was Te-17, Ge-20, C-20, H-31, and O-12 atomic percents.

Example 9. A thin film was deposited on polycarbonate disk substrate by co-sputtering Te and Ge in $CH_4$ containing atmosphere. The target powers were 7 and 50 Watt for Te and Ge, respectively, and the flow rates were 20 and 7.5 SCCM for Ar and $CH_4$, respectively at a total pressure of 8.78 mTorr. The film was deposited and a gold reflector layer was sputter deposited and an organic lacquer protective layer was spin coated.

A recording experiment was performed as in the examples above. The recording power at the second harmonic minimum was 11 mW. The reflectivity was 74.8%, and the $I_{11}/I_{top}$ was 77%.

Example 10. A thin film was deposited on a polycarbonate disk substrate by co-sputtering Te and Ge in $CH_4$ containing atmosphere. The target powers were 12 and 50 Watt for Te and Ge, respectively, and the flow rates were 20 and 7.5 SCCM for Ar and $CH_4$, respectively at the total pressure of 8.76 mTorr. The film was deposited and a gold reflector layer was sputter deposited and an organic lacquer protective layer was spin coated.

A recording experiment was performed as in the examples above. The recording power at the second harmonic minimum was 15 mW. The reflectivity was 77.3% and the $I_{11}/I_{top}$ was 80%.

Example 11. A thin film was deposited on polycarbonate disk substrate by co-sputtering Te and Ge in $CH_4$ containing atmosphere. The target powers were 14 and 50 Watt for Te and Ge, respectively and the flow rates were 20 and 7.5 SCCM for Ar and $CH_4$, respectively at the total pressure of 8.76 mTorr. The film was deposited and then a gold reflector layer was sputter deposited and an organic lacquer protective layer was spin coated.

A recording experiment was performed as in the example above. The recording power at the second harmonic minimum was 12.5 mW. The reflectivity was 73.1%, and the $I_{11}/I_{top}$ was 72%.

Example 12. A thin film was deposited on polycarbonate disk substrate by co-sputtering Te, Sb and Ge in $CH_4$ containing atmosphere. The target powers were 10, 10 and 50 Watt for Te, Sb and Ge, respectively, and the flow rates were 20 and 7.5 SCCM for Ar and $CH_4$, respectively at the total pressure of 8.87 mTorr. The film was deposited and a gold reflector layer was sputter deposited and an organic lacquer protective layer was spin coated.

A recording experiment was performed as in the examples above. The recording power at the second harmonic minimum was 9 mW. The reflectivity was 74.7%, and the $I_{11}/I_{top}$ was 66%.

The invention has been described in detail with particular reference to certain preferred embodiments thereof, but it will be understood that variations and modifications can be effected within the spirit and scope of the invention.

## PARTS LIST

| 10 | substrate |
| 12 | recording layer |
| 14 | reflective layer |

## Claims

1. A recordable element having a substrate and on the surface of the substrate, a recording layer and a light reflecting layer, the improvement comprising a recording layer including material given by the formula $M_aC_bH_cX_dO_e$ wherein M is Sb or Te or an alloy of Sb and Te, C is carbon, H is hydrogen, X is Si or Ge or a combination of the two, and O is oxygen; a is between 10 and 45; b is less than 40, c is less than 40; d is between 10 and 40; e is less than 20, preferably less than 10 and $a+b+c+d+e=100$.

2. The recordable element of claim 1 wherein a/d <3.

3. A recordable element as in claim 1 wherein a is between 15 and 35; b is between 10 and 30; c is between 15 and 35; d is between 15 and 25; e is less than 10.

4. A recordable element having a substrate and on the surface of the substrate, a recording layer and a light reflecting layer, the improvement comprising a recording layer including material given by the formula $M_aC_bH_cX_dO_e$ wherein M is Sb or Te or an alloy of Sb and Te, C is carbon, H is hydrogen, X is Si or Ge or a combination of the two, and O is oxygen.

FIG. 1

FIG. 2